# EUROPEAN PATENT SPECIFICATION

(11) **EP 0 836 937 B1**
(45) Date of publication and mention of the grant of the patent: **05.12.2007**
(21) Application number: 97660110.4
(22) Date of filing: 17.10.1997
(51) Int. Cl.: B32B 27/36, B65D 65/40

(54) **Plastic laminate**
Kunststofflaminat
Laminé en matière plastique

(30) Priority: 17.10.1996 FI 964176; 16.10.1997 FI 973976
(43) Date of publication of application: 22.04.1998
(73) Proprietor: Wipak Oy, 15560 Nastola (FI)
(72) Inventor: Junnila, Jarmo, 15210 Lahti (FI); Koivisto, Pentti, 15550 Nastola (FI); Saaristo, Esko, 15550 Nastola (FI)
(74) Representative: Pitkänen, Kirsi-Marja

(56) References cited:
- EP-A- 0 547 032
- EP-A- 0 626 255
- WO-A-90/04517
- WO-A-95/15257

## Description

The present invention is directed to laminates that are produced of plastic material, have high barrier properties and are used for packaging, the laminates comprising a foamed polyester layer as a part of the laminate structure. The plastic laminates according to the invention are particularly well suited for food packages that are expected to seal well and, where necessary, to be openable for example, by peeling, as well as to have high gas and moisture barrier properties. In practice, these packages known as modified atmosphere packages (MAP) are expected to have an oxygen permeability of less than 15 cm³/m², preferably 4.0 to 9.0 cm³/m² (24 h, 23°C, RH 50%).

In the production of MAP packages, flexible film materials are used either as such or in combination with semi-rigid, thick formable films or sheets used as part of the package, depending on the requirements set by the use of the package concerned. Sufficient barrier properties can be achieved with mono films, but the film is then so thick that the solution is impractical.

When rigid films or sheets are used as a final product, the package is easy to handle, has good transport and storing properties and is visually pleasant. Rigid MAP packages are known to be produced by using thermoplastic sheets to which one or more film layers are adhered where necessary. Adhesive and/or bonding layers can also be used between these layers. The sheets are produced e.g. of polyester/polyethylene, polyvinylchloride/polyethylene or polystyrene/EVOH/polyethylene sheets. Thermoplastic polyester resins, such as polyethylene terephthalate (PET), amorphous polyethylene terephthalate (APET), glycol-modified polyethylene terephthalate, polybutylene terephthalate, cyclohexylenemethylene terephthalate or isophthalate, or mixtures thereof, are particularly useful in the packaging industry due to their excellent mechanical properties, heat resistance in crystallized form, dimensional stability, and thermoplastic properties. Sheet structures like these, however, have a high density, and so the raw material, transport and waste costs are high. In addition, expensive special equipment, such as means for preheating the sheet from above and from below and piston or "posiform" equipment, are needed for thermoforming the sheets. Further, special tools, such as punching knifes, are needed for detaching the packages from one another by cutting. Rigid packages like these are not easy to compress by hand, so they take a lot of space in waste processing.

To produce lighter packages, foamed plastic materials can be used either separately or as a part of the laminate structure. In food packages there are typically used foamed polystyrene (PS) and polyolefin, such as polypropylene (PP). The foaming degree used is very high, and so the density can drop down to 0.1 to 0.3 g/m³. These packages, which are used e.g. for packaging meat and processed meat for supermarkets, are pleasant to handle. A problem with such low-density packages is that their rigidity and thereby strength are impaired considerably. Because of this, the layer thickness of the packaging material must be notable so as to provide sufficient rigidity. The notable layer thickness and "airy" structure, however, cause problems in the thermoforming, since heat is transferred to the material slowly. Consequently, the thermoforming requires special-made moulds and heating on both sides at several stages, and so the investments needed in the packaging machinery are high. The notable layer thickness also results in a smaller number of square metres of material per one selling unit, so that much more selling units are needed per one unit of goods, which in turn raises the transport, storing and packaging costs by raising the number of roller changes needed and by reducing the output.

European Patent Application 440,713 teaches a flexible laminate comprising a foam layer, intended particularly for food packages, and more particularly for foods that contain, for example, hard material, such as bones. In the structure described in the document, the layer closest to the material to be packaged is a foam layer, and the next layer is a non-foam layer of the same material. To the laminate is also attached an outside layer via adhesive layers, the outside layer being typically of polyamide or polyester. The foam layer is stated to be of foamed polyolefin, preferably polyethylene. The foam layer closest to the material to be packaged is to function as a "buffer", i.e. to protect the outside layers e.g. against stress put on them by, for example bones.

In addition to polystyrene and polyolefins, it is also known to use foamed polyester, such as PET, as packaging material. As a result is obtained a sheet that is easy to thermoform and that can be crystallized, whereby the cups formed will have a high heat resistance. Plates, cups, etc. made of foamed polyester by thermoforming are commonly used e.g. in producing microwave resistant packages for processed foods. In them, the foam sheets must also be rather thick so that sufficient rigidity is achieved. The surface of foamed plastic materials, and thereby also that of polyester, is uneven, and sufficient laminating strength cannot be achieved by common laminating methods at a reasonable cost. Further, heat sealing of foamed polyester is difficult, due to low bonding strength caused by low adhesion of the foam surface. The sealing requires a long sealing time or a high sealing pressure, which often impairs the strength of the package. In addition, the long sealing time raises the packaging costs. Further, foamed mono-layer films are not sufficiently oxygen-tight, for example, for easily perishable foods or products needing a long shelf-life.

European Patent Applications 372,846, 547,032 and 547,033 (Sekisui Kasehin Kogyo) describe food packages produced by laminating on at least one side of a foamed polyester foam layer a non-foamed plastic layer, such as an EVA-coated polypropylene, polypropylene, polyester or polystyrene film. In the document, the foam layer has a density of at most 0.7 g/cm³, preferably below 0.5 g/cm³. Due to the low density, the thickness of the foam layer is also in this document above 1.5 mm, even about 5.0 mm. The packaging materials described in the document are intended to be used particularly as heat-resistant packages, especially as microwave-resistant packages. The document does not mention anything about the barrier properties of the structure.

The above-mentioned European Patent Application 372,846 also describes lamination of layers by a thermolaminating method. In the method, polymers with a high melting point, for example polypropylene and polyester, are used as non-foamed components (as the sealing side) in the inside layer, and ethylene vinylacetate is used as the layer laminated against the foamed polyester. The lamination temperatures are, for example, about 125°C for polypropylene and 155°C for PET on the non-foamed side, and the room temperature on the side of the foamed polyester. The sealing temperatures of the PP and PET laminates in the method described in the document are rather high, up to 160 to 200°C. It is commonly known that easily perishable foods, such as meat, fish and cheese, do usually not endure sealing temperatures that are this high. The packages described in the document are not sufficiently oxygen-tight for easily perishable foods.

WO-A-9515257 concerns a laminate comprising two or three layers, which are directly connected to each other. When said material comprises three layers, said layers are polymeric core layer (1) consisting of a foamed thermoplastic and protective layers (2) and (3) consisting of non-foamed thermoplastic, and the core layer (1) is between protective layers (2) and (3). All said three layers can be based on the same thermoplastic, such as polyester.

EP-A-626255 discloses a separable foamed thermoplastic resin laminate sheet comprising a foamed thermoplastic resin sheet and a thermoplastic resin film, wherein the peel strength between the foamed thermoplastic resin sheet and the thermoplastic resin film is 5 to 400 g/25 mm width. Said thermoplastic resin film can be a gas barrier film comprising e.g. polyamide or polyester. An adhesive layer may be between the foamed thermoplastic resin sheet and the thermoplastic resin film.

Further, thermoforming machines, i.e. so-called Form Fill and Seal (FFS) machines which produce packages of a roll-shaped semi-rigid sheet, typically use a sealing temperature of 100 to 150°C in packaging fresh foods, so homopolypropylene and polyester cannot be used as sealing layers. On the other hand, these polymers do not provide a sufficient gas barrier with the layer thicknesses typically used e.g. in MAP packages.

In the prior art, rigid MAP packages are thus produced of a semi-rigid non-foamed material. Problems encountered in packages like this include the quantity of material needed, the weight of the packages, and the amount of space they require in uncompressed form in waste processing. The use of foamed materials as a part of the laminate makes the package lighter, but to make the package sufficiently rigid, thick foam layers are needed. It is also problematic to provide the package with sufficient barrier properties so that the material to be packaged is not damaged by heat e.g. during the sealing.

An object of the present invention is to provide a packaging material that is easy to thermoform and has good gas and moisture barrier properties.

Another object of the invention is to provide a light packaging material with thin layers and yet with good rigidity and other mechanical properties.

Yet another object of the invention is to provide a packaging material that is easy to seal, i.e. can be sealed at low temperatures in a short sealing time.

A further object of the invention is to provide a material that can be forced into a small space after use, and that is easy to handle as waste and requires little space.

A still further object of the invention is to reduce the quantity of polyester used and thereby provide a more economic packaging material.

Another object of the invention is to provide methods of producing the above-described packaging materials.

Yet another object of the invention is to provide a method for using a material with the above properties as a package with high barrier properties particularly for easily perishable foods or products needing a long shelf-life. The present invention can also be used e.g. in packages for medical products, where it can replace other semi-rigid packaging materials.

Practice has shown that the oxygen permeability of the laminate in a MAP package has to be below 15 cm³/m², preferably 4.0 to 9.0 cm³/m² (24 h, 23°C, RH 50%). Further, particularly when fresh foods are packaged, the package has to be hermetically sealable, i.e. it has to be easy to seal at low temperatures, i.e. at 100 to 140°C, preferably at 110 to 125°C, in a short sealing time, i.e. in about 0.5 to 1.5 s, and the joint has to be sufficiently strong.

Surprisingly, it has now been found that the above properties can be achieved with a laminate structure that is characterized by what is stated in claim 1.

The laminate according to the invention will be described in greater detail with reference to the attached figures. The invention, however, is not to be limited to the solutions illustrated in the figures, but the solutions should be considered to illustrate typical or preferred embodiments of a laminate according to the invention.
Fig. 1 shows a schematic view of the basic structure of a laminate according to the invention.
Fig. 2 shows a schematic view of one preferred embodiment of the laminate according to the invention.
Fig. 3 shows a schematic view of a laminate not falling within the scope of the present invention.
Fig 4 shows a schematic view of a laminate not falling within the scope of the present invention.
Figs. 5a and 5b, respectively, show a schematic side view and top view of a package produced of the laminate according to the invention.

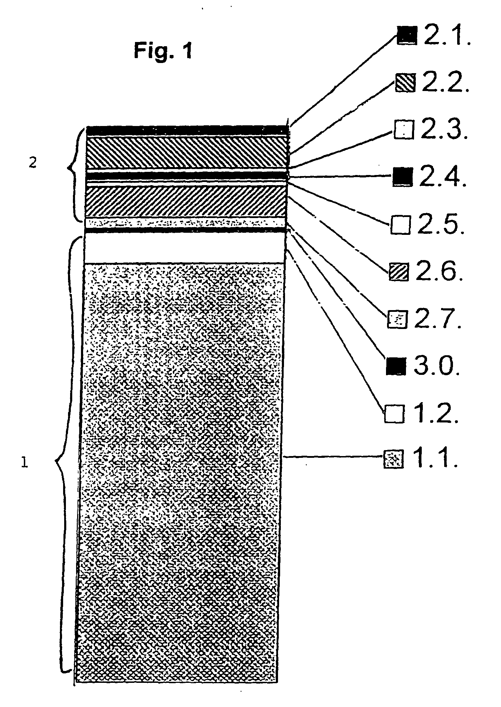

Fig. 1 shows a potential structure of a laminate according to the invention. The laminate comprises an inside layer 2 comprising one or more coextruded film layers, which in Fig. 1 are layers 2.1 to 2.7, the inside layer being closest to the material to be packaged; and an outside layer 1 comprising a structure formed of a foamed polyester layer 1.1 and a non-foamed polyester layer 1.2 by coextrusion. Between the inside layer 2 and the outside layer 1 can be arranged an intermediate layer 3 functioning as an adhesive or bonding layer.

The inside layer 2 comprises several layers, depending on what is required of the laminate: is it primarily expected to have an excellent gas barrier, a low sealing temperature, a "peel" joint that is easy to open, high punching resistance, or possibly all of these at the same time. The desired properties can be achieved by modifying the surface to be sealed and the intermediate layers. The thickness of the inside layer usually varies between 0.05 and 0.1 mm.

The function of layer 2.4 in the solution of Fig. 1 is to make the laminate sufficiently gas tight. The desired protective properties are achieved by selecting the polymer suitably. Polymers typically making the package sufficiently gas tight include polyamide (PA) and a copolymer of ethylene and vinylalcohol (EVOH). Layers 2.3 and 2.5 function as bonding layers between the protective layer 2.4 and the other layers of the inside layer 2. The function of the outermost layer 2.7 of the inside layer 2 is to give the other layers of the structure the desired bonding characteristics. Layers 2.2 and 2.6, for example, are polyolefin layers.

The outside layer 1 of the laminate according to the invention comprises a non-foamed polyester layer 1.2 with an even surface. The non-foamed polyester layer is always closest to the inside layer 2, attached to it either directly or via the intermediate layer 3. Due to the even layer 1.2, the adhesion between the foam layer and the inside or intermediate layers is good.

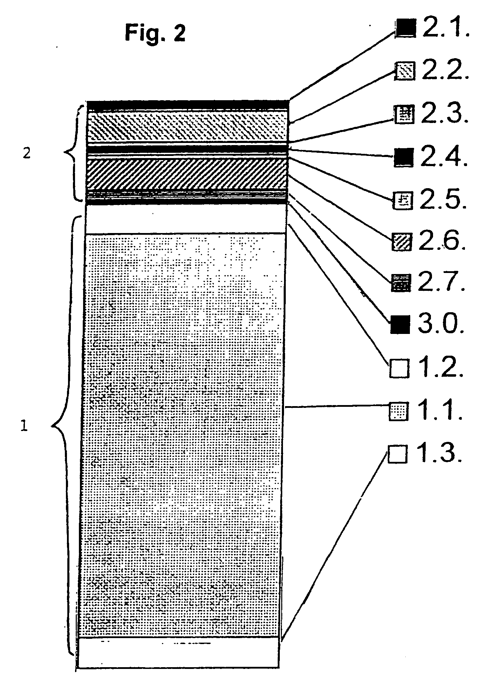

Fig. 2 illustrates an embodiment of the laminate structure of the invention in which there is also a non-foamed polyester layer 1.3 outside the foamed polyester layer 1.1. This is a preferred solution when an even and glossy outside surface is to be provided e.g. for printing, or for forming of an identification mark or code. The primary function of the outside layer 1 comprising a foamed and a non-foamed layer is to give the finished package a shape and mechanical strength.

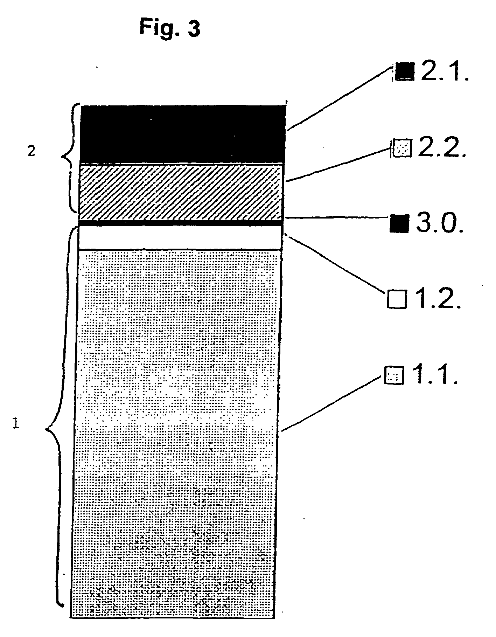

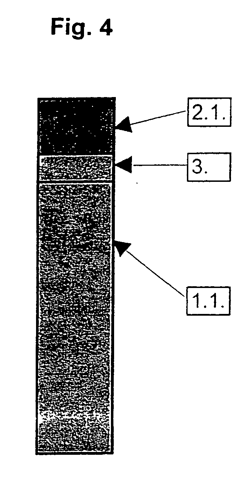

Figures 3 and 4 are for illustrative purposes and describe only some aspects of the invention. The subject matter of Figures 3 and 4 is not within the scope of the present claims.

Fig. 3 shows a laminate in which the inside layer 2 does not comprise a separate protective layer providing a gas barrier, but the inside layer comprises a layer 2.1 to be sealed and/or several coextruded polyolefin layers, such as layer 2.2.

Fig. 4 shows a laminate in which the outside layer comprises only the foamed polyester layer 1.1 to which the inside layer is attached via the intermediate layer 3 functioning as a bonding or adhesive layer. The laminate is produced using a coextrusion method.

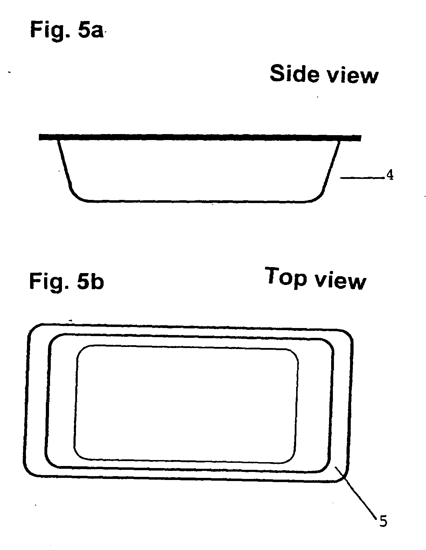

Fig. 5 shows a container 4 made of a film laminate according to the invention by thermoforming, the container being attached to a cover 5 above it by sealing, the cover being e.g. a suitable film laminate.

The outside layer 1 of the laminate according to the invention with high barrier properties and used for packaging thus comprises a foamed polyester layer and a non-foamed polyester layer. The polyester used can be e.g. polyethylene terephthalate (PET), amorphous polyethylene terephthalate (APET), glycol-modified polyethylene terephthalate, polybutylene terephthalate, cyclohexylenemethylene terephthalate or isophtalate, or mixtures thereof. To produce a foamed polyester, commercially available foaming agents are used, preferably foaming agents that react endothermically during the processing. By the action of heat, the foaming particles evaporate and form pores in the material. Typical commercially available foaming agents, such as Safoam RPC 40 (Reedy International, U.S.A.), Supercell EN-3 (Americhem, U.K.), 100209 MB (Ampacet Corporation, U.S.A.) and Hydrocerol HK40B (Boehringer Ingelheim KG, Germany), are used in a quantity of 0.5 to 3% by weight, preferably 1 to 2.5% by weight of the polyester to be foamed. With these quantities, a foamed sheet is produced that is sufficiently rigid because of the microscopic pores of the foam structure. If a too large quantity of a foaming agent is used, the cell structure is broken and the foaming is uneven. A too small quantity of a foaming agent, on the other hand, does not foam the plastic material sufficiently. The density of the outside layer 1 of the laminate according to the invention, i.e. the density of the layer contained in the final foamed polyester and non-foamed polyester, is above 0.7 g/cm³, but below 1.0 g/cm³, whereby the thickness of the outside layer can be low, i.e. 0.15 to 1.5 mm, the layer thickness preferably being 0.20 to 1.0 mm. The proportion of the non-foamed polyester layer to the total thickness of the outside layer is 5 to 40%, preferably 10 to 25%. The outside layer comprising a foamed layer and a non-foamed layer can also comprise other common additives, such as colourants, anti-adhesive agents, nucleating agents, slip additives and/or fillers, etc.

The thin, light laminate according to the invention with high barrier properties replaces the rigid or semi-rigid, non-foamed MAP packages produced e.g. of polyester and previously used in the field. With the solution of the invention, a notable quantity of material is saved. For example, the commonly used non-foamed amorphous PET has a density of 1.34 g/cm³, whereas the density of the outside layer (1) in the laminate of the invention is 0.7 to 1.0 g/cm³, so the raw material can be used much more efficiently in the laminate of the invention comprising a foamed layer. Since a finished package can be made sufficiently strong by using a layer that is much thinner than the previously known foamed products, i.e. has a layer thickness of 0.15 to 1.5 mm, the laminate of the invention is advantageous in respect of the quantity of material needed, which in turn reduces the costs resulting from loss, transport, storage, waste, etc. Naturally, a package needing less raw material is also ecologically more preferable. Another particularly important feature is that the thin and light laminate of the invention with a polyester foam structure is easy to seal and can be easily formed into a package with the desired gas and moisture barrier properties, without that the product to be packaged is damaged. In addition, the mechanical properties of the laminate are such that the laminate meets the other requirements set by the different uses.

The semi-rigid laminate according to the invention is easy and simple to use in the packaging machines known per se. No expensive special equipment, such as preheating stations on both sides, piston or "posiform" forming systems or special punching knifes for detaching the packages from one another by cutting, are needed in the packaging machines. Since the material is easy to mould, seal and cut, the output of the packaging room increases.

The package of the invention is easy to compress after use by hand, and it also maintains the compressed form. In addition, the package is easy to tear into pieces, which means that it can be forced into a smaller space than common foamed or non-foamed materials, for example, in receptacles for waste.

A laminate of the invention comprising a foam layer is produced in the ways described below.

### Lamination method

### A) Production of an outside layer 1 comprising a foamed polyester layer and a non-foamed polyester layer:

A polyester used as a basic raw material, preferably polyethylene terephthalate (PET), amorphous polyethylene terephthalate (APET), glycol-modified polyethylene terephthalate, polybutylene terephthalate, cyclohexylenemethylene terephthalate or isophthalate, or mixtures thereof, is supplied to a drier in which the dew point of the drying air is below -30°C. The temperature of the drying air is at least 165°C, and the polyester is dried in the drier for 5 to 7 hours, i.e. until the moisture content of the dried polyester is below 0.005%, preferably below 0.002%. The dried polyester is supplied to an extruder with any additives needed. Apart from the polyester, to the input of the extruder of the layer 1.1 to be foamed is supplied 0.5 to 3% by weight, preferably 1 to 2.5% by weight of a foaming agent, and any other additives needed, such as colourants, anti-adhesive agents, slip additives, fillers, nucleating agents, etc. By the action of gravity, the raw materials flow to the extruder, where they melt and mix by the action of pressure and heat, i.e. a temperature of about 230 to 300°C, preferably about 250 to 290°C. The non-foamed and foamed melt layer are combined and supplied to a flat die along melt conduits. To generate an even feed pressure and to minimize the variation of thickness in the final product, mass pumps are preferably arranged after the extruders. After a mass pump, the pressure is maintained at above 5000 kPa (50 bar), preferably at above 6000 kPa (60 bar), to prevent premature foaming in the die. The temperature is maintained between 230 and 300°C in the die, preferably between 250 and 290°C. The molten mass is cooled by a roller system that can be cooled, and is then wound up. The thickness of the final product can be regulated by adjusting the pumping pressure, the opening of the lip of the die, the winding rate, and the efficiency of cooling, so that the thickness of the final sheet is 0.15 to 1.5 mm and the density is above 0.7 g/cm³, but below 1.0 g/cm³. The thickness of the non-foamed layer is about 5 to 40%, preferably about 10 to 25% of the total thickness of the sheet.

### B) Combining of the inside layer 2 and the outside layer 1

Of the outside layer 1 produced in the manner described above and the inside layer 2 produced of one or more coextruded film layers is produced a laminate by adhesion lamination: an adhesive layer functioning as an intermediate layer 3 is applied either onto the outside or the inside layer, and the layers are combined between press rollers in a continuous process. Once the adhesive has cured, the laminate can be cut into parts that have the width required, for example, by the packaging machine used. It is also possible to attach the layers to one another by thermal energy and compression or by other known methods of attachment.

### Coextrusion method

The laminate of the invention can also be produced by a coextrusion method. In this method, the inside layer 2 can be attached directly to the non-foamed polyester layer 1.2 of the outside layer 1 via the intermediate layer 3 that functions as a bonding or adhesive layer. The outside layer can optionally comprise a non-foamed polyester layer 1.3 as the outermost layer. The foamed polyester layer 1.1 and the non-foamed polyester layer 1.2 are is extruded as described above, and the intermediate layer 3 is extruded together with the inside layer 2 to the outside layer. The innermost layer of the inside layer is preferably made of polyolefin, preferably of a homopolymer or copolymer of ethylene, a copolymer of ethylene and vinylacetate or ethylene and methacrylic acid, or a polymer modified with metal ions. If polyethylene is used, then it is possible to use as the adhesive polymer layer, for example, polymers typically used between polyester and polyethylene, such as a copolymer of ethylene and methacrylic acid, modified with anhydride. In the invention, the inside layer 2 can comprise a plural number of layers to provide the desired barrier properties for the finished laminate.

The following examples describe in greater detail the present invention.

### Example 1

A foamed sheet was coextruded from amorphous polyethylene terephthalate together with a non-foamed layer in the manner described above (item A). The total thickness of the coextruded sheet was 0.45 mm and density 0.82 g/cm³, and the thickness of the non-foamed part was about 0.08 mm. The sheet was laminated by adhesive lamination with a 0.05 mm thick polyethylene film that contained a protective layer. The total thickness of the laminate was 0.5 mm.

Of the laminate, a package was made by thermoforming, using a thermoforming machine Tiromat 3000 with the following set values:

| | |
|---|---|
| forming depth initial forming temperature | 50 mm |
| upper side | 105°C |
| lower side | 105°C |
| heating period | 3.5 s |
| sealing temperature | 125°C |
| sealing time | 1.5 s |

The forming was effected by the action of under pressure without any mechanical help from the piston. The laminate produced was sufficiently thermoplastic and sealed hermetically.

### Example 2

Of amorphous polyethylene terephthalate was produced a sheet with a total thickness of 0.26 mm and density of 0.86 g/cm³ in the manner described in Example 1. The thickness of the non-foamed part was 0.04 mm. A 0.3 mm thick laminate was also produced in accordance with Example 1. A 20 mm deep cup was formed by a thermoforming machine, and an upper film was attached to it by sealing, using the same set values as in Example 1.

### Example 3

Of amorphous polyethylene terephthalate was produced a sheet with a total thickness of 0.8 mm and density of 0.81 g/cm³ in the manner described in Example 1. The thickness of the non-foamed part was 0.13 mm. A 0.85 mm thick laminate was also produced in accordance with Example 1. A 60 mm deep cup was formed by a thermoforming machine, and an upper film was attached to it by sealing, using the same set values as in Example 1.

### Example 4 (not falling within the scope of the claims)

Of amorphous polyethylene terephthalate was coextruded a foamed layer together with a polyethylene layer. An anhydride-modified copolymer of ethylene and methacrylic acid was used between the foamed layer and the polyethylene layer as an adhesive layer. The total thickness of the coextruded sheet was 0.5 mm and density 0.82 g/cm³. A 50 mm deep cup was formed by a thermoforming machine, and an upper film was attached to it by sealing, using the same set values as in Example 1.

The laminates according to the invention containing a polyester foam layer were compared with corresponding clear (non-foamed) laminates and with foamed laminates in which the foamed material was polypropylene. The mechanical values, ultimate strength, ultimate elongation and tear strength measured from the laminates are presented in Table 1.

Of the laminates were also formed cups of an identical depth, having a size of 114 x 223 mm and a depth of 25 mm. The force needed for compressing a cup like this was determined by compressing a formed cup in the forming direction between two sheets extending past the edges of the cup for a predefined period. The compression rate was 50 mm/min, and the maximum force achieved was determined by an INSTRON tensile testing machine at a compression distance of 1 cm. The result indicates the force needed for compressing a formed product, the force describing the rigidity and mechanical strength of the product.

The samples tested were as follows:
1. a laminate according to Example 1
2. a clear non-foamed PET/PE laminate
3. a clear non-foamed PET/PE laminate
4. a laminate according to Example 2
5. a foamed PP/PE laminate
6. a laminate according to Example 3.

**Table 1**

| Sample no. | Thickness mm | Weight per square metre g/m² | Ultimate strength^{(a} N/mm² | Ultimate elongation ^{(b} % | Tear strength^{(c} mN | Compression force^{(d}/N |
|---|---|---|---|---|---|---|
| 1 | 0.500 | 435 | 23* | 9.2* | 1220* | 122 |
| | | | 18** | 21.8** | 1640** | |
| 2 | 0.500 | 651 | 53* | 40.1 * | >4000* | 94 |
| | | | 50** | 32** | >4000** | |
| 3 | 0.300 | 384 | 48* | 28* | 3947* | 30 |
| | | | 42** | 65** | >4000** | |
| 4 | 0.310 | 270 | 21* | 10* | 393* | 42 |
| | | | 16** | 17** | 833** | |
| 5 | 1.200 | 324 | 9* | 22* | 795* | 48 |
| | | | 7* | 22** | 840** | |
| 6 | 0.850 | 756 | 22* | 7* | >4000* | 239 |
| | | | 20** | 11** | >4000** | |

| | | | | | | |
|---|---|---|---|---|---|---|
| ^{(a} ASTM D-882 ^{(b} ASTM D-882 ^{(c} ASTM D-1 922 ^{(d} WIPAK * horizontal direction ** vertical direction | | | | | | |

On the basis of the results, the foamed container according to the invention can be stated to be at least equally rigid or even more rigid than a non-foamed PET/PE laminate of the same or almost the same thickness, and much more rigid than a foamed PP/PE laminate.

The ultimate elongation and tear strength describe the hardness and fragility of the material. When the results are compared, the foamed material according to the invention is noted to have a lower ultimate elongation, i.e. the material will break under a lower stress, and so it is easier to cut in a packaging machine. On the other hand, a lower tear strength indicates that the material is easy to tear, for example, by hand, and thereby easier to dispose of.

The laminate samples were also measured for oxygen permeability (cm³/m²/24h/50%RH) by the Oxtran method. In the laminates of the invention (samples 1, 4 and 6), the measurement was conducted in the inside layer 2 used in the laminate.

The results are shown in Table 2.

**Table 2**

| | 1 | 2 | 3 | 4 | 5 | 6 |
|---|---|---|---|---|---|---|
| Oxygen permeability cm³/m² | 4.5 | 10 | 16 | 4.5 | 5 | 4.5 |

## Claims

1. A plastic laminate comprising a foamed layer which laminate is used for packaging and comprises an outside layer (1) of a plastic material, an inside layer (2) consisting of more than one plastic film layers, and optionally an intermediate layer (3) between the inside layer (2) and the outside layer (1), functioning as a bonding layer or an adhesive layer, **characterized in that**
the outside layer (1) comprises an outer layer (1.1) of foamed polyester and an inner layer (1.2) of non-foamed polyester, and optionally a second, outermost layer (1.3) of non-foamed polyester on the opposite side of the outer layer (1.1), and
the inside layer (2) comprises a plastic film layer that provides a gas barrier, the non-foamed polyester layer (1.2) being closest to the inside layer (2), attached to it either directly or via the intermediate layer (3), and that
the density of the outside layer (1) in the laminate is above 0.7 g/cm³, but below 1.0 g/cm³,
the thickness of the outside layer (1) in the laminate is 0.15 to 1.5 mm, preferably 0.2 to 1.0 mm, and
the laminate has an oxygen permeability of less than 15 cm³/m², preferably 4.0 to 9.0 cm³/m².

2. A plastic laminate according to claim 1, **characterized in that** the inside layer (2) is attached to the outside layer (1) via the intermediate layer (3).

3. A plastic laminate according to any one of claims 1 and 2, **characterized in that** the film layer contained in the inside layer (2) and providing a gas barrier is of polyamide or a copolymer of ethylene and vinylalcohol.

4. A plastic laminate according to any one of preceding claims, **characterized in that** the layer of the inside layer that provides a gas barrier is attached to any other layers of the inside layer (2) by means of bonding layers.

5. A plastic laminate according to any one of preceding claims, **characterized in that** the inside layer (2) comprises a sealing layer (2.1) as the innermost layer.

6. A plastic laminate according to claim 5, **characterized in that** the sealing layer (2.1) is a so-called peel film layer, which is easy to open.

7. A plastic laminate according to claim 5, **characterized in that** the sealing layer (2.1) is of polyolefin, preferably of a homopolymer or copolymer of ethylene.

8. A plastic laminate according to any one of preceding claims, **characterized in that** the polyester used in the outside layer (1) is polyethylene terephthalate (PET), amorphous polyethylene terephthalate (APET), glycol-modified polyethylene terephthalate, polybutylene terephthalate, cyclohexylenemethylene terephthalate or isophthalate, or a mixture thereof, preferably polyethylene terephthalate or amorphous polyethylene terephthalate.

9. A plastic laminate according to any one of preceding claims, **characterized in that** the outside layer (1) comprises a foaming agent and optionally other additives, such as colourants, anti-adhesive agents, slip additives, nucleating agents and/or fillers.

10. A plastic laminate according to any one of preceding claims, **characterized in that** the thickness of the laminate is 0.2 to 1.6 mm, preferably 0.2 to 1.1 mm.

11. A plastic laminate according to any one of preceding claims, **characterized in that** the total thickness of the non-foamed layers (1.2 or 1.2 and 1.3) of the outside layer is 5 to 40%, preferably 10 to 25% of the total thickness of the outside layer (1).

12. A method of producing a plastic laminate according to claim 1 comprising a foamed layer, which laminate is used for packaging and comprises an outside layer (1) of a plastic material, an inside layer (2) consisting of more than one plastic film layers, and optionally an intermediate layer (3) between the inside layer (2) and the outside layer (1), functioning as a bonding layer or an adhesive layer, **characterized in that** the outside layer (1) is formed by coextruding through a flat die an outer layer (1.1) of foamed polyester and an inner layer (1.2) of non-foamed polyester and optionally a second, outermost layer (1.3) of non-foamed polyester on the opposite side of the outer layer (1.1) as the outside layer (1), and that the inside layer (2) is attached to the inner, non-foamed layer (1.2) of the outside layer either directly or via the intermediate layer (3).

13. A method according to claim 12, **characterized in that** the outside layer (1) is attached to the inner layer (2) by using adhesion lamination.

14. A method of producing a plastic laminate according to claim 2, used for packaging, the laminate comprising an outside layer (1) of a plastic material, an inside layer (2) consisting of more than one plastic film layers, and an intermediate layer (3) between the inside layer (2) and the outside layer (1), functioning as a bonding layer or an adhesive layer, **characterized in that** the outside layer (1) is coextruded with the inside layer (2) and the intermediate layer (3).

15. A method according to claim 14, **characterized in that** an innermost film layer (2.1) in the inside layer is a sealing layer made of a homopolymer or copolymer of ethylene, and that the intermediate layer (3) is made of a copolymer of ethylene and methacrylic acid, modified with anhydride.

16. Use of a plastic laminate according to any one of claims 1 to 11 as a packaging material for foods, particularly for easily perishable foods.

17. Use of a plastic laminate according to any one of claims 1 to 11 as a packaging material for medical products.

18. A package particularly for packaging foods, **characterized in that** a container (4) of a desired shape has been made of a plastic laminate as defined in any one of claims 1 to 11 by thermoforming, and that the container has been attached to an upper cover (5) by sealing.

## Patentansprüche

1. Kunststofflaminat, welches eine geschäumte Schicht aufweist und zu Verpackungszwecken eingesetzt wird, und welches eine Außenschicht (1) aus einem Kunststoffmaterial, eine Innenschicht (2), die aus mehr als einer Kunststofffilmschicht besteht, und gegebenenfalls eine Zwischenschicht (3) zwischen der Innenschicht (2) und der Außenschicht (1) aufweist, welche als Verbindungsschicht oder Haftschicht dient, **dadurch gekennzeichnet, dass**
die Außenschicht (1) eine außen liegende Schicht (1.1) aus geschäumtem Polyester und eine innen liegende Schicht (1.2) aus nicht geschäumtem Polyester und gegebenenfalls eine zweite, am weitesten außen liegende Schicht (1.3) aus nicht geschäumtem Polyester auf der gegenüber liegenden Seite der außen liegenden Schicht (1.1) umfasst, und
die Innenschicht (2) eine Kunststofffilmschicht aufweist, welche eine Gasbarriere bildet, wobei die nicht geschäumte Polyesterschicht (1.2) der Innenschicht (2) am nächsten liegt und an dieser entweder direkt oder über die Zwischenschicht (3) befestigt ist, und dass
die Dichte der Außenschicht (1) in dem Laminat über 0,7 g/cm³, jedoch unter 1,0 g/cm³ beträgt,
die Dicke der Außenschicht (1) in dem Laminat 0,15 bis 1,5 mm, vor zugsweise 0,2 bis 1,0 mm beträgt, und
das Laminat eine Durchlässigkeit gegenüber Sauerstoff von weniger als 15 cm³/m², vorzugsweise von 4,0 bis 9,0 cm³/m², besitzt.

2. Kunststofflaminat nach Anspruch 1, **dadurch gekennzeichnet, dass** die Innenschicht (2) an der Außenschicht (1) über die Zwischenschicht (3) befestigt ist.

3. Kunststofflaminat nach einem der Ansprüche 1 und 2, **dadurch gekennzeichnet, dass** die in der Innenschicht (2) enthaltene Filmschicht, die eine Gasbarriere bildet, aus Polyamid oder aus einem Kopolymer aus Ethylen und Vinylalkohol besteht.

4. Kunststofflaminat nach einem der vorhergehenden Ansprüche, **dadurch gekennzeichnet, dass** die Schicht der Innenschicht, die eine Gasbarriere bildet, an jeglicher anderer Schicht der Innenschicht (2) mittels Haftschichten befestigt ist.

5. Kunststofflaminat nach einem der vorhergehenden Ansprüche, **dadurch gekennzeichnet, dass** die Innenschicht (2) eine Versiegelungsschicht (2.1) als am weitesten innen liegende Schicht aufweist.

6. Kunststofflaminat nach Anspruch 5, **dadurch gekennzeichnet, dass** die Versiegelungsschicht (2.1) eine so genannte Abziehfilmschicht ist, die sich auf einfache Weise öffnen lässt.

7. Kunststofflaminat nach Anspruch 5, **dadurch gekennzeichnet, dass** die Versiegelungsschicht (2.1) aus Polyolefin besteht, vorzugsweise aus einem Ethylen-Homopolymer oder einem Ethylen-Kopolymer.

8. Kunststofflaminat nach einem der vorhergehenden Ansprüche, **dadurch gekennzeichnet, dass** es sich bei dem in der Außenschicht (1) verwendeten Polyester um Polyethylenterephthalat (PET), amorphes Polyethylenterephthalat (APET), Glykol-modifiziertes Polyethylenterephthalat, Polybutylenterephthalat, Cyclohexylenmethylenterephthalat oder-isophthalat oder um ein Gemisch daraus, vorzugsweise um Polyethylenterephthalat oder um amorphes Polyethylenterephthalat, handelt.

9. Kunststofflaminat nach einem der vorhergehenden Ansprüche, **dadurch gekennzeichnet, dass** die Außenschicht (1) einen Schaumbildner und gegebenenfalls auch andere Zusatzstoffe wie Färbemittel, adhäsionshemmende Mittel, Gleitmittel, keimbildende Mittel und/oder Füllstoffe enthält.

10. Kunststofflaminat nach einem der vorhergehenden Ansprüche, **dadurch gekennzeichnet, dass** die Dicke des Laminats 0,2 bis 1,6 mm, vorzugsweise 0,2 bis 1,1 mm, beträgt.

11. Kunststofflaminat nach einem der vorhergehenden Ansprüche, **dadurch gekennzeichnet, dass** die Gesamtdicke der nicht geschäumten Schichten (1.2 oder 1.2 und 1.3) der Außenschicht 5 bis 40 %, vorzugsweise 10 bis 25 %, der Gesamtdicke der Außenschicht (1) beträgt.

12. Verfahren zur Herstellung eines Kunststofflaminats nach Anspruch 1, welches eine geschäumte Schicht aufweist und zu Verpackungszwecken eingesetzt wird, und welches eine Außenschicht (1) aus einem Kunststoffmaterial, eine Innenschicht (2), die aus mehr als einer Kunststofffilmschicht besteht, und gegebenenfalls eine Zwischenschicht (3) zwischen der Innenschicht (2) und der Außenschicht (1) aufweist, welche als Verbindungsschicht oder Haftschicht dient, **dadurch gekennzeichnet, dass** die Außenschicht (1) gebildet wird, indem eine außen liegenden Schicht (1.1) aus geschäumtem Polyester und eine innen liegenden Schicht (1.2) aus nicht geschäumtem Polyester und gegebenenfalls eine zweite, am weitesten außen liegende Schicht (1.3) aus nicht geschäumtem Polyester auf der gegenüber liegenden Seite der außen liegenden Schicht (1.1) als Außenschicht (1) durch ein flaches Extrusionswerkzeug koextrudiert wird, und dass die Innenschicht (2) an der innen liegenden, nicht geschäumtem Schicht (1.2) der Außenschicht entweder direkt oder über die Zwischenschicht (3) angebracht wird.

13. Verfahren nach Anspruch 12, **dadurch gekennzeichnet, dass** die Außenschicht (1) durch Verwendung von Adhäsions-Laminierung an der Innenschicht (2) angebracht wird.

14. Verfahren zur Herstellung eines Kunststofflaminats nach Anspruch 2, das zum Verpacken verwendet wird, wobei das Laminat eine Außenschicht (1) aus einem Kunststoffmaterial, eine Innenschicht (2), die aus mehr als einer Kunststofffilmschicht besteht, und zwischen der Innenschicht (2) und der Außenschicht (1) eine Zwischenschicht (3) aufweist, welche als Verbindungsschicht oder Haftschicht dient, **dadurch gekennzeichnet, dass** die Außenschicht (1) zusammen mit der Innenschicht (2) und der Zwischenschicht (3) koextrudiert wird.

15. Verfahren nach Anspruch 14, **dadurch gekennzeichnet, dass** die am weitesten innen liegende Filmschicht (2.1) in der Innenschicht eine Versiegelungsschicht ist, die aus einem Ethylen-Homopolymer oder Ethylen-Kopolymer hergestellt ist, und dass die Zwischenschicht (3) aus einem Kopolymer aus Ethylen und Methacrylsäuremodifiziert mit Anhydrid, hergestellt ist

16. Verwendung eines Kunststofflaminats nach einem der Ansprüche 1 bis 11 als Verpackungsmaterial für Nahrungsmittel, insbesondere für leicht verderbliche Nahrungsmittel.

17. Verwendung eines Kunststofflaminats nach einem der Ansprüche 1 bis 11 als Verpackungsmaterial für medizinische Erzeugnisse.

18. Verpackung, insbesondere zum Verpacken von Lebensmitteln, **dadurch gekennzeichnet, dass** ein Behälter (4) von gewünschter Form aus einem Kunststofflaminat gemäß einem der Ansprüche 1 bis 11 durch thermisches Umformen gebildet wurde und dass der Behälter durch Versiegelung an einer oberen Abdeckung (5) befestigt wurde.

## Revendications

1. Stratifié plastique comprenant une couche en mousse, lequel stratifié est utilisé pour l'emballage et comprend une couche extérieure (1) en matière plastique, une couche intérieure (2) constituée de plus d'une couche de film plastique, et facultativement d'une couche intermédiaire (3) entre la couche intérieure (2) et la couche extérieure (1), fonctionnant comme une couche de liaison ou une couche adhésive, **caractérisé en ce que**
la couche extérieure (1) comprend une couche externe (1.1) de poly(ester) en mousse et une couche interne (1.2) de poly(ester) non en mousse, et facultativement une seconde couche la plus externe (1.3) de poly(ester) non en mousse sur le côté opposé à la couche externe (1.1), et
la couche intérieure (2) comprend une couche en film plastique qui forme une barrière aux gaz, la couche en poly(ester) non en mousse (1.2) étant la plus près de la couche intérieure (2), fixée à celle-ci soit directement, soit via la couche intermédiaire (3), et **en ce que**
la masse volumique de la couche extérieure (1) dans le stratifié est supérieure à 0,7 g/cm³, mais inférieure à 1,0 g/cm³,
l'épaisseur de la couche extérieure (1) dans le stratifié est de 0,15 à 1,5 mm, de préférence de 0,2 à 1,0 mm, et
le stratifié présente une perméabilité à l'oxygène inférieure à 15 cm³/m², de préférence de 4,0 à 9,0 cm³/m².

2. Stratifié plastique selon la revendication 1, **caractérisé en ce que** la couche intérieure (2) est fixée à la couche extérieure (1) via la couche intermédiaire (3).

3. Stratifié plastique selon l'une quelconque des revendications 1 et 2, **caractérisé en ce que** la couche de film contenue dans la couche intérieure (2) et formant une barrière aux gaz est en polyamide ou un copolymère d'éthylène et d'alcool vinylique.

4. Stratifié plastique selon l'une quelconque des revendications précédentes, **caractérisé en ce que** la couche de la couche intérieure qui forme une barrière aux gaz est fixée à l'une quelconque des autres couches de la couche intérieure (2) au moyen de couches de liaison.

5. Stratifié plastique selon l'une quelconque des revendications précédentes, **caractérisé en ce que** la couche intérieure (2) comprend une couche d'étanchéité (2.1) en tant que couche la plus interne.

6. Stratifié plastique selon la revendication 5, **caractérisé en ce que** la couche d'étanchéité (2.1) est ce que l'on appelle une couche de film pellicule, qui est facile à ouvrir.

7. Stratifié plastique selon la revendication 5, **caractérisé en ce que** la couche d'étanchéité (2.1) est en poly(oléfine), de préférence un homopolymère ou un copolymère d'éthylène.

8. Stratifié plastique selon l'une quelconque des revendications précédentes, **caractérisé en ce que** le poly(ester) utilisé dans la couche extérieure (1) est du téréphtalate de poly(éthylène) (PET), du téréphtalate de poly(éthylène) amorphe (APET), du téréphtalate de poly(éthylène) modifié par glycol, du téréphtalate de poly(butylène), du téréphtalate ou de l'isophtalate de cyclohexylèneméthylène, ou un mélange de ceux-ci, de préférence le téréphtalate de poly(éthylène) ou le téréphtalate de poly(éthylène) amorphe.

9. Stratifié plastique selon l'une quelconque des revendications précédentes, **caractérisé en ce que** la couche extérieure (1) comprend un agent moussant et facultativement d'autres additifs, tels que des colorants, des antiadhésifs, des additifs glissants, des agents de nucléation et/ou des charges.

10. Stratifié plastique selon l'une quelconque des revendications précédentes, **caractérisé en ce que** l'épaisseur du stratifié est de 0,2 à 1,6 mm, de préférence de 0,2 à 1,1 mm.

11. Stratifié plastique selon l'une quelconque des revendications précédentes, **caractérisé en ce que** l'épaisseur totale des couches non en mousse (1.2 ou 1.2 et 1.3) de la couche extérieure est de 5 à 40 %, de préférence de 10 à 25 % de l'épaisseur totale de la couche extérieure (1).

12. Procédé de production d'un stratifié plastique selon la revendication 1, comprenant une couche en mousse, lequel stratifié est utilisé pour l'emballage et comprend une couche extérieure (1) en matière plastique, une couche intérieure (2) constituée de plus d'une couche en film plastique, et facultativement d'une couche intermédiaire (3) entre la couche intérieure (2) et la couche extérieure (1), fonctionnant comme une couche de liaison ou une couche adhésive, **caractérisé en ce que** la couche extérieure (1) est formée par coextrusion à travers une filière plate d'une couche externe (1.1) en poly(ester) en mousse et d'une couche interne (1.2) en poly(ester) non en mousse et facultativement d'une seconde couche la plus externe (1.3) en poly(ester) non en mousse sur le côté opposé de la couche externe (1.1) en tant que couche extérieure (1), et **en ce que** la couche intérieure (2) est fixée à la couche interne non en mousse (1.2) de la couche extérieure soit directement, soit via la couche intermédiaire (3).

13. Procédé selon la revendication 12, **caractérisé en ce que** la couche extérieure (1) est fixée à la couche interne (2) en utilisant une stratification par adhérence.

14. Procédé de production d'un stratifié plastique selon la revendication 2, utilisé pour l'emballage, le stratifié comprenant une couche extérieure (1) en matière plastique, une couche intérieure (2) constituée de plus d'une couche de film plastique, et d'une couche intermédiaire (3) entre la couche intérieure (2) et la couche extérieure (1), fonctionnant comme une couche de liaison ou une couche adhésive, **caractérisé en ce que** la couche extérieure (1) est coextrudée avec la couche intérieure (2) et la couche intermédiaire (3).

15. Procédé selon la revendication 14, **caractérisé en ce qu'**une couche de film la plus interne (2.1) dans la couche intérieure est une couche d'étanchéité constituée d'un homopolymère ou d'un copolymère d'éthylène, et **en ce que** la couche intermédiaire (3) est constituée d'un copolymère d'éthylène et d'acide méthacrylique, modifié avec un anhydride.

16. Utilisation d'un stratifié plastique selon l'une quelconque des revendications 1 à 11, en tant que matériau d'emballage pour des denrées alimentaires, en particulier des denrées alimentaires facilement périssables.

17. Utilisation d'un stratifié plastique selon l'une quelconque des revendications 1 à 11, en tant que matériau d'emballage pour des produits médicaux.

18. Emballage particulièrement destiné à emballer des denrées alimentaires, **caractérisé en ce qu'**un conteneur (4) d'une forme souhaitée a été constitué d'un stratifié plastique selon l'une quelconque des revendications 1 à 11 par thermoformage, et **en ce que** le conteneur a été fixé à un couvercle supérieur (5) par scellement.
